# EUROPEAN PATENT APPLICATION

(11) **EP 4 068 061 A1**
(43) Date of publication of application: **05.10.2022**
(21) Application number: 20896365.2
(22) Date of filing: 02.12.2020
(51) Int. Cl.: G06F 3/041

(54) **METHOD, 3D DISPLAY DEVICE AND 3D TERMINAL FOR REALIZING FLOATING TOUCH**

(30) Priority: 05.12.2019 CN 201911231145
(71) Applicant: Beijing Ivisual 3D Technology Co., Ltd., Beijing 100055 (CN); Visiotech Ventures Pte. Ltd., Singapore 188979 (SG)
(72) Inventor: DIAO, Honghao, Beijing 100055 (CN); HUANG, Lingxi, Singapore 188979 (SG)
(74) Representative: Manitz Finsterwald Patent- und Rechtsanwaltspartnerschaft mbB
(86) International application number: PCT/CN2020/133323
(87) International publication number: WO 2021/110030

(57) **Abstract**

The present application relates to the field of 3D images, and discloses a method for realizing floating touch, comprising: controlling a multi-viewpoint 3D display screen to display a 3D touch object, and acquiring a floating touch position of a user relative to the multi-viewpoint 3D display screen; and generating touch trigger information when the floating touch position matches the display position of the 3D touch object. Different from 2D touch, the floating touch technology in the present application can realize position matching in a 3D space to generate the touch trigger information. The present application further discloses a 3D display device and a 3D terminal for realizing floating touch, a computer readable storage medium and a computer program product.

## Description

The present application claims priority to the Chinese Patent Application with an application number of 2019112311451 and a title of "Method, 3D Display Device and 3D Terminal for Realizing Floating Touch", filed to China National Intellectual Property Administration on December 5th, 2019, the disclosures of which are hereby incorporated by reference.

### Technical Field

The present disclosure relates to 3D display technologies, and for example, relates to a method, a 3D display device and a 3D terminal for realizing floating touch based on a multi-viewpoint 3D display screen.

### Background

A display touch technology provides convenient and efficient information input for users, so that the users can efficiently perform information interaction. It is particularly necessary to acquire touch information in 3D display, which can improve feeling of being personally on the scene for the users and can also improve information input and information interaction efficiency of the users. An existing acquisition manner of 3D display touch points is consistent with a conventional 2D touch point acquisition manner. A metal wire is arranged on a display panel, and then the position of the touch point is obtained after capacitance or voltage change is sensed. In such a manner, a 3D display effect is achieved. However, touch is still detected in a 2D plane, thereby causing the problem of non-uniformity of senses and severely affecting the information input and information interaction efficiency of the users.

The background is merely for the convenience of understanding related technologies in the field, rather than being regarded as recognition of existing technologies.

### Summary

In order to provide a basic understanding of some aspects of the disclosed embodiments, a brief summary of some embodiments is given below. The brief summary is not intended to identify key/important components or describe the scope of protection of the present invention, but to be a preface to the following detailed description.

Embodiments of the present disclosure are intended to provide a method, a 3D display device and a 3D terminal for realizing floating touch, a computer readable storage medium and a computer program product, so as to realize touch and uniformity of display senses.

In one solution, a method for realizing floating touch is provided, comprising: controlling a multi-viewpoint 3D display screen to display a 3D touch object, and acquiring a floating touch position of a user relative to the multi-viewpoint 3D display screen; and generating touch trigger information when the floating touch position matches the display position of the 3D touch object.

In some embodiments, the multi-viewpoint 3D display screen comprises a plurality of composite subpixels, and each composite subpixel in the plurality of composite subpixels comprises a plurality of subpixels corresponding to a plurality of viewpoints; and controlling the multi-viewpoint 3D display screen to display the 3D touch object comprises: dynamically rendering the subpixels in the composite subpixels of the multi-viewpoint 3D display screen based on 3D signals according to a viewpoint where eyes of the user locate, to display the 3D touch object for the user in a 3D effect.

In some embodiments, acquiring the floating touch position of the user relative to the multi-viewpoint 3D display screen comprises: collecting a user image of the user; and acquiring a spatial position of a touch medium of the user relative to the multi-viewpoint 3D display screen according to the user image, wherein the touch medium comprises a finger of the user or a stylus pen.

In some embodiments, the display position of the 3D touch object comprises a depth of field (DOF) and a plane position of the 3D touch object.

In some embodiments, generating the touch trigger information when the floating touch position matches the display position of the 3D touch object comprises: generating touch trigger information when the floating touch position matches the plane position of the 3D touch object and a distance of the floating touch position relative to the multi-viewpoint 3D display screen matches the DOF of the 3D touch object, wherein the touch trigger information comprises the 3D touch object that matches the floating touch position.

In some embodiments, generating the touch trigger information when the distance, between the floating touch position and the multi-viewpoint 3D display screen matches the DOF of the 3D touch object comprises: generating touch trigger information when the distance between the floating touch position and the multi-viewpoint 3D display screen is less than the DOF of the 3D touch object; or, generating the touch trigger information when a difference between the distance, between the floating touch position and the multi-viewpoint 3D display screen, and the DOF of the 3D touch object is in a threshold range; or, generating the touch trigger information when the difference between the distance, between the floating touch position and the multi-viewpoint 3D display screen, and the DOF of the 3D touch object is in the threshold range and when the distance between the floating touch position and the multi-viewpoint 3D display screen is less than the DOF of the 3D touch object.

In another solution, a 3D display device for realizing floating touch is provided, comprising: a multi-viewpoint 3D display screen; a 3D processing apparatus, configured to control the multi-viewpoint 3D display screen to display a 3D touch object; an image collecting apparatus, configured to collect a user image; a floating touch position generating device, configured to acquire a floating touch position of a user relative to the multi-viewpoint 3D display screen according to the user image; and a touch detection device, configured to generate touch trigger information when the floating touch position matches the display position of the 3D touch object.

In some embodiments, the floating touch position generating device is configured to acquire a spatial position of a touch medium of the user relative to the multi-viewpoint 3D display screen according to the user image, wherein the touch medium comprises a finger of the user or a stylus pen.

In some embodiments, the multi-viewpoint 3D display screen comprises a plurality of composite subpixels, and each composite subpixel in the plurality of composite subpixels comprises a plurality of subpixels corresponding to a plurality of viewpoints; and the 3D processing apparatus is configured to dynamically render the subpixels in the composite subpixels of the multi-viewpoint 3D display screen based on 3D signals according to a viewpoint where eyes of the user locate.

In some embodiments, the 3D display device further comprises an eye positioning device, configured to acquire the viewpoint where eyes of the user locate.

In some embodiments, the display position of the 3D touch object comprises a DOF and a plane position of the 3D touch object; the touch detection device is configured to generate touch trigger information when the floating touch position matches the plane position of the 3D touch object and when a distance of the floating touch position relative to the multi-viewpoint 3D display screen matches the DOF of the 3D touch object, wherein the touch trigger information comprises the 3D touch object that matches the floating touch position.

In some embodiments, the touch detection device is configured to: generate touch trigger information when the distance between the floating touch position and the multi-viewpoint 3D display screen is less than the DOF of the 3D touch object; or, generate the touch trigger information when a difference between the distance, between the floating touch position and the multi-viewpoint 3D display screen, and the DOF of the 3D touch object is in a threshold range; or, generate the touch trigger information when the difference between the distance, between the floating touch position and the multi-viewpoint 3D display screen, and the DOF of the 3D touch object is in the threshold range and when the distance between the floating touch position and the multi-viewpoint 3D display screen is less than the DOF of the 3D touch object.

In another solution, a 3D terminal for realizing floating touch is provided, comprising: a processor; and a memory storing program instructions; and the processor is configured to execute the above method for realizing floating touch when the program instructions are executed.

The computer readable storage medium provided by embodiments of the present disclosure stores computer executable instructions, and the computer executable instructions are set for executing the above method for realizing floating touch.

The computer program product provided by embodiments of the present disclosure comprises computer programs stored on the computer readable storage medium, the computer programs comprise program instructions, and when the program instructions are executed by a computer, the above computer executes the above method for realizing floating touch.

Different from 2D touch, the floating touch technology in the present disclosure can realize position matching in a 3D space to generate the touch trigger information.

The above overall description and descriptions below are merely illustrative and interpretive, rather than used for limiting the present application.

### Description of Drawings

One or more embodiments are illustrated by the corresponding drawings, and the illustrations and drawings do not limit the embodiments. Elements having the same reference numerals in the drawings are shown as similar elements, and the drawings are not intended to limit the scale, wherein:
Figs. 1A-1D are structural schematic diagrams of a 3D display device according to embodiments of the present disclosure;
Fig. 2A is a schematic diagram of floating touch performed by a user according to embodiments of the present disclosure;
Fig. 2B is a flow chart of a method for realizing floating touch according to embodiments of the present disclosure;
Fig. 2C is a schematic diagram of a show zone of a display screen in a floating touch realizing process according to embodiments of the present disclosure;
Fig. 3 is a structural schematic diagram of a 3D display device according to embodiments of the present disclosure;
Figs. 4A-4C are schematic diagrams of composite pixels according to embodiments of the present disclosure;
Figs. 5A-5E are schematic diagrams of formats and contents of images comprised in video frames of a 3D signal according to embodiments of the present disclosure;
Fig. 6 is a schematic diagram of at least two 3D processing apparatuses provided by embodiments of the present disclosure; and
Fig. 7 is a structural schematic diagram of a computer of a 3D terminal for realizing floating touch according to embodiments of the present disclosure.

Reference numerals:
1000: 3D display device; 100: multi-viewpoint 3D display screen; CP: composite pixel; CSP: composite subpixel; SP: subpixel; 101: processor; 110: display panel; 120: grating; 122: register; 130: 3D processing apparatus; 131: cache; 140: signal interface; 150: eye positioning device; 151: eye positioning data interface; D: distance of the floating touch position relative to the multi-viewpoint 3D display screen; DOF: depth of field; SZ: show zone; 2000: 3D display device; 210: image collecting apparatus; 220: floating touch position generating device; 230: touch detection device; 400: composite pixel; 410, 420, 430, 440, 450, 460, 470, 480, 490: composite subpixels; 411, 421, 431, 441, 451, 461, 471, 481, 491: subpixels; 501, 502: images of parallel formats; 503, 504: images of top-bottom formats; 505, 506, 507: composite images; 700: processor; 701: memory; 702: communication interface; 703: bus.

### Detailed Description

For more detailed understanding of characteristics and technical contents of embodiments of the present disclosure, the implementation of the embodiments of the present disclosure will be described in detail below with reference to the accompanying drawings, and the accompanying drawings are used for reference only, instead of limiting the embodiments of the present disclosure.

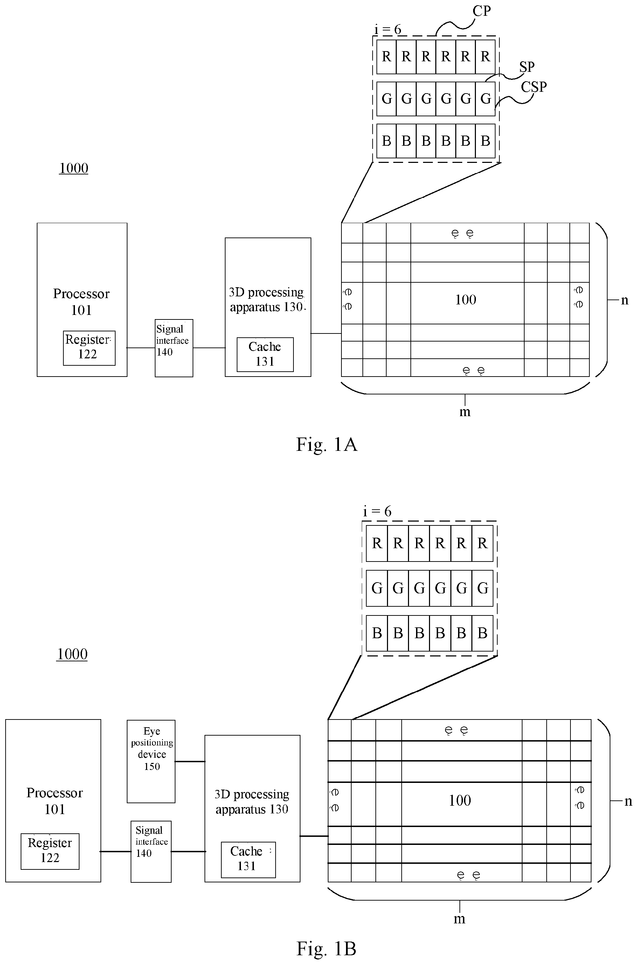

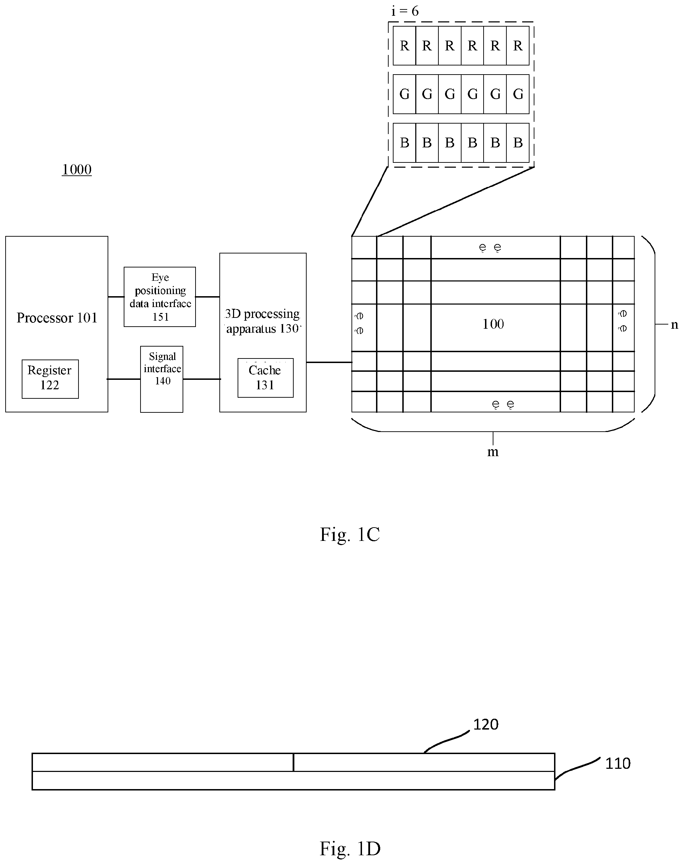

In some embodiments of the present disclosure, as shown in Figs. 1A-1D, a 3D display device is provided, comprising a multi-viewpoint 3D display screen 100 (such as a multi-viewpoint naked eye 3D display screen). The multi-viewpoint 3D display screen comprises a display panel 110 and a grating 120 arranged on the display panel 110. m×n composite pixels CP are arranged on the display panel 110, and thus the display resolution of m×n is defined; the composite pixels CP comprise a plurality of composite subpixels CSP, and each of the composite subpixels CSP is composed of i homochromatic subpixels SP corresponding to i viewpoints, and the i is more than or equal to 3. The multi-viewpoint 3D display screen 100 can generate an image that corresponds to viewpoint information according to the viewpoint information, and render the plurality of composite subpixels CSP, corresponding to the viewpoint information, in the composite pixels CP. The image corresponding to the viewpoint information is displayed from an overall viewing effect. For example, the left eye of a user is located at a viewpoint 3, and the right eye is located at a viewpoint 6; correspondingly, the subpixels, corresponding to the viewpoint 3, in all the composite pixels CP of the multi-viewpoint 3D display screen 100 are rendered corresponding to each pixel point in the left-eye image, and the subpixels corresponding to the viewpoint 6 are rendered corresponding to each pixel point in the right-eye image, thereby enabling the user to see a 3D display effect.

Light rays of the subpixels SP are projected to different locations in the space by the grating 120 in the multi-viewpoint 3D display screen 100 in embodiments of the present disclosure, and light emitted by different subpixels SP in the composite pixels CP can be seen by the eyes located at different spatial positions.

In embodiments of the present disclosure, the multi-viewpoint 3D display screen 100 displays a 3D display picture comprising a touch object in a display touch scene; and a display effect of the touch object is also a 3D effect. Generally, a display depth value of the touch object is defined by referring to a display panel, so a spatial position of the floating touch position relative to the display plane may be acquired by detecting the floating touch position of the user, thereby knowing whether the floating touch position matches the touch object. If matching, events bound by the touch object are triggered, such as generation and OnClick (button num) events. The events may, for example, comprise operations of opening a file, closing a file, paying for an order or sending a message, etc. The touch trigger information acquired in embodiments of the present disclosure may be bound with user-defined functions. It should be noted that, according to the touch trigger information generated in the present disclosure, in addition to generation of trigger events, a spatial position and a plane position of the floating touch position during trigger and a track of the floating touch position in a period of time after trigger may be further generated.

In some embodiments of the present disclosure, a 3D display device 1000 is provided, and may be further applied to the above process of generating the touch trigger information for realizing floating touch, comprising: a multi-viewpoint 3D display screen 100, comprising m×n composite pixels CP and thus defining the display resolution of m×n; a signal interface 140 used for receiving a video frame of a 3D signal, wherein the video frame of the 3D signal comprises two images having m×n resolution or comprises a composite image having 2m×n or m×2n resolution; and a 3D processing apparatus 130.

In some embodiments, the 3D processing apparatus is in communication connection with the multi-viewpoint 3D display screen.

In some embodiments, the 3D processing apparatus is in communication connection with a drive device of the multi-viewpoint 3D display screen.

In some embodiments, each composite pixel CP comprises a plurality of composite subpixels CSP, and each of the composite subpixels CSP is composed of i homochromatic subpixels corresponding to i viewpoints, wherein i is more than or equal to 3.

In some embodiments, the 3D processing apparatus 130 is configured to render at least one subpixel in each composite subpixel based on one of the two images and to render at least another subpixel in each composite subpixel based on the other of the two images.

In some other embodiments, the 3D processing apparatus 130 is configured to render at least two subpixels in each composite subpixel based on the composite image.

Fig. 1A shows a structural schematic diagram of the 3D display device 1000 provided by embodiments of the present disclosure. Referring to Fig. 1A, the 3D display device 1000 is provided in the embodiments of the present disclosure, and may comprise the multi-viewpoint 3D display screen 100, the 3D processing apparatus 130 and the signal interface 140 used for receiving the video frame of the 3D signal. The 3D display device 1000 in the present disclosure can be applied to the method for realizing floating touch and is configured to display the 3D touch object.

In the embodiment shown as Fig. 1A, the multi-viewpoint 3D display screen 100 may comprise m×n composite pixels and thus define the display resolution of m×n. As shown in Fig. 1A, the multi-viewpoint 3D display screen 100 comprises m columns and n rows of composite pixels CP and thus defines the display resolution of m×n.

In some embodiments, each composite pixel CP comprises a plurality of composite subpixels; and each of the composite subpixels is composed of i homochromatic subpixels corresponding to i viewpoints, wherein i is more than or equal to 3. In the embodiment shown as Fig. 1A, i is equal to 6, but it may be contemplated that i is another numerical value. In the shown embodiment, the multi-viewpoint 3D display may correspondingly have i (i=6) viewpoints (VI-V6), but it may be contemplated that the multi-viewpoint 3D display may correspondingly have more or less viewpoints.

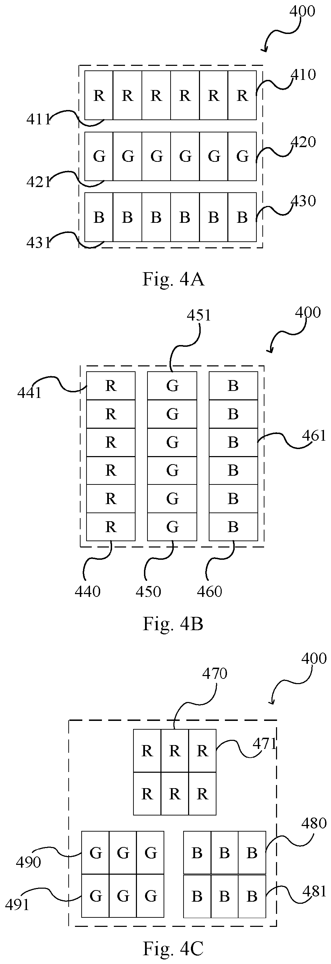

By referring to Fig. 1A and Fig. 4A, in the shown embodiment, each composite pixel comprises three composite subpixels, and each of the composite subpixels is composed of 6 homochromatic subpixels corresponding to 6 viewpoints (i=6). The three composite subpixels respectively correspond to three colors, i.e., red (R), green (G) and blue (B). In other words, the three composite subpixels of each composite pixel respectively have 6 red subpixels, 6 green subpixels or 6 blue subpixels.

In the embodiments shown as Figs. 1A and 4A, the composite subpixels 410, 420 and 430 in the composite pixel 400 are arranged in a single row. Each of the composite subpixels 410, 420 and 430 comprises subpixels 411, 421 and 431 in a single line form. However, it may be contemplated that, the composite subpixels in the composite pixels are arranged in different manners or the subpixels in the composite subpixels are arranged in different formats.

As shown in Fig. 4B, each of the composite subpixels 440, 450 and 460 is arranged in a single line and respectively comprises subpixels 441, 451 and 461 in a single-line form.

As shown in Fig. 4C, the three composite subpixels 470, 480 and 490 in the composite pixel 400 are arranged in a three-rectangle shape. In the embodiment shown as Fig. 4C, the subpixels 471, 481 and 491 in each of the composite subpixels 470, 480 and 490 are arranged in an array form (3×2).

In some embodiments, as shown in Figs. 1A-1C, the 3D display device 1000 may be provided with a single 3D processing apparatus 130. The single 3D processing apparatus 130 simultaneously processes rendering of each composite subpixel in each composite pixel of the multi-viewpoint 3D display screen 100, and the multi-viewpoint 3D display screen may be a large-size multi-viewpoint 3D display screen.

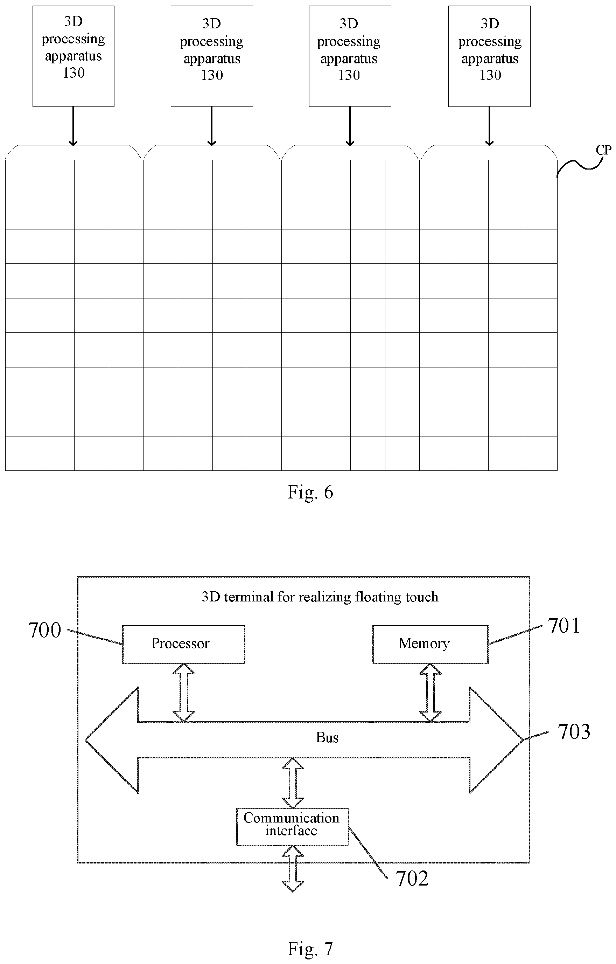

In some other embodiments, as shown in Fig. 6, the 3D display device 1000 may be provided with at least two 3D processing apparatuses 130 which process rendering of each composite subpixel in each composite pixel of the multi-viewpoint 3D display screen 100 in parallel, in series or in series/parallel combination, and the multi-viewpoint 3D display screen may be a large-size multi-viewpoint 3D display screen.

Those skilled in the art will understand that, the at least two 3D processing apparatuses 130 may be allocated in other manners and process, for example, multi-row multi-column composite pixels or composite subpixels of the large-size multi-viewpoint 3D display screen 100 in parallel, which falls within the scope of the present disclosure.

In some embodiments, the 3D processing apparatus 130 may further optionally comprise a cache 131,for caching the received video frame.

In some embodiments, the 3D processing apparatus 130 is an FPGA or ASIC chip or an FPGA or ASIC chipset.

By continuously referring to Fig. 1A, the 3D display device 1000 may further comprise a processor 101 that is in communication connection with the 3D processing apparatus 130 through a signal interface 140. In some embodiments shown in the present disclosure, the processor 101 is comprised in a computer or an intelligent terminal such as a mobile terminal or serves as a processor unit. However, it may be contemplated that, in some embodiments, the processor 101 may be arranged outside the 3D display device. For example, the 3D display device may be a multi-viewpoint 3D display with the 3D processing apparatus, such as a non-intelligent 3D TV or a non-intelligent cinema screen.

For simplicity, the processor is comprised in the illustrative embodiment of the 3D display device below. Further, the signal interface 140 is configured as an internal interface for connecting the processor 101 and the 3D processing apparatus 130. In some embodiments of the present disclosure, the signal interface 140 serving as the internal interface of the 3D display device 1000 may be an MIPI, a mini-MIPI, an LVDS interface, a min-LVDS interface or a Display Port. In some embodiments, as shown in Fig. 1A, the processor 101 of the 3D display device 1000 may further comprise a register 122. The register 122 may be used for temporarily storing instructions, data and addresses.

In some embodiments, the 3D display device 1000 may further comprise an eye positioning device or an eye positioning data interface used for acquiring eye positioning data in real time, so that the 3D processing apparatus 130 may render corresponding subpixels in the composite pixels (composite subpixels) based on the eye positioning data. For example, in the embodiment shown as Fig. 1B, the 3D display device 1000 may further comprise an eye positioning device 150 in communication connection with the 3D processing apparatus 130, and thusthe 3D processing apparatus 130 may directly receive the eye positioning data. In the embodiment shown as Fig. 1C, the eye positioning device (not shown) may be, for example, directly connected with the processor 101, while the 3D processing apparatus 130 acquires the eye positioning data from the processor 101 via an eye positioning data interface 151. In some other embodiments, the eye positioning device may be simultaneously connected with the processor and the 3D processing apparatus. On the one hand, the 3D processing apparatus 130 may directly acquire the eye positioning data from the eye positioning device, and on the other hand, information acquired by the eye positioning device may be processed by the processor.

In some embodiments, the 3D display device 1000 may further comprise an image collecting apparatus, used for acquiring user images of the user, such as facial images, so that the 3D processing apparatus 130 may match the acquired facial image features with authorized facial image features to judge whether conditions are met.

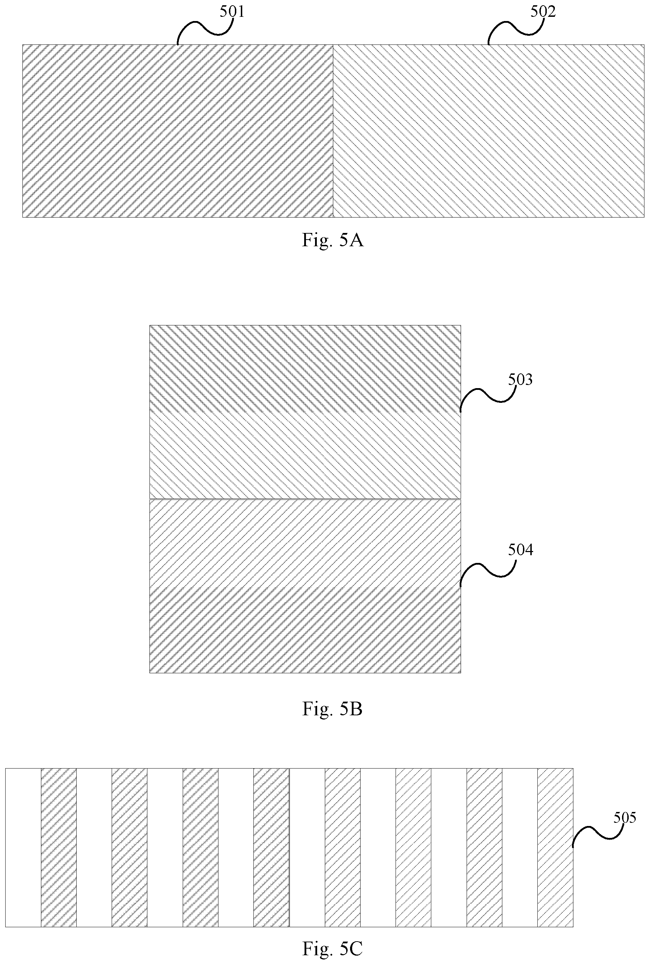

Referring to Figs. 1A-1C and Figs. 5A-5E, transmission and display of 3D signals in the 3D display device in some embodiments of the present disclosure are described. In the shown embodiments, the multi-viewpoint 3D display screen 100 may define 6 viewpoints V1-V6, and display of corresponding subpixels in the composite subpixels of each composite pixel in the display panel of the multi-viewpoint 3D display screen 100 may be seen by the eyes of the user at various viewpoints (spatial positions). Two different pictures seen by the eyes of the user at different viewpoints form parallax, thereby compositing a 3D image in the brain.

In some embodiments of the present disclosure, the 3D processing apparatus 130 receives, for example, video frames of a decompressed 3D signal from the processor 101 through, for example, the signal interface 140 serving as the internal interface. Each video frame may comprise two images having m×n image resolution or comprise a composite image having 2m×n or m×2n image resolution, or is composed of the images.

In some embodiments, the two images or the composite image may comprise images of different types and may be arranged in various forms.

As shown in Fig. 5A, the video frame of the 3D signal comprises two images 501 and 502 having the m×n image resolution in parallel or is composed of the images. In some embodiments, the two images may be respectively a left-eye parallax image and a right-eye parallax image. In some embodiments, the two images may be respectively a color rendering image and a DOF image.

As shown in Fig. 5B, the video frame of the 3D signal comprises two images 503 and 504 having the m×n image resolution in a top-bottom format or is composed of the images. In some embodiments, the two images may be respectively a left-eye parallax image and a right-eye parallax image. In some embodiments, the two images may be respectively a color rendering image and a DOF image.

As shown in Fig. 5C, the video frame of the 3D signal comprises a composite image 505 having the 2m×n image resolution in a left-right interleaved format. In some embodiments, the composite image may be a left-right interleaved left-eye and right-eye parallax composite image or a left-right interleaved color rendering and DOF composite image.

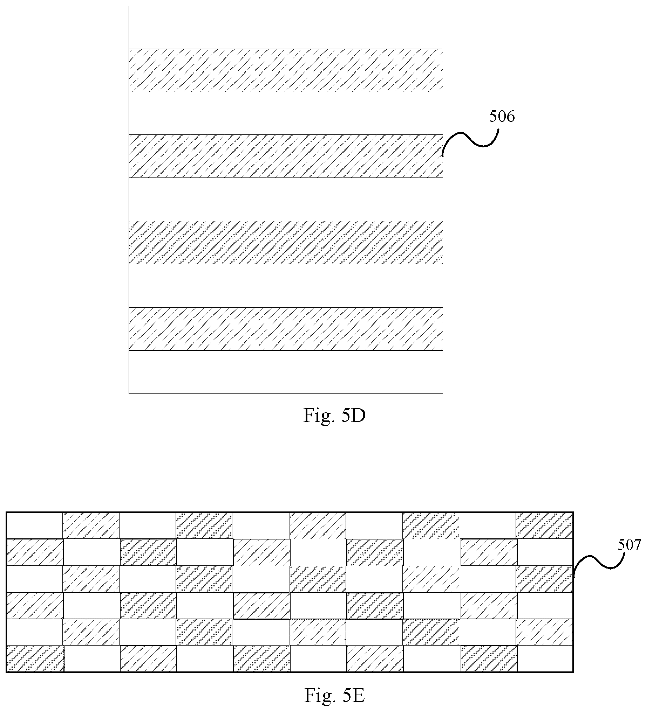

As shown in Fig. 5D, the video frame of the 3D signal comprises a composite image 506 having the m×2n image resolution in a top-bottom interleaved format. In some embodiments, the composite image may be a top-bottom interleaved left-eye and right-eye parallax composite image. In some embodiments, the composite image may be atop-bottom interleaved color rendering and DOF composite image.

As shown in Fig. 5E, the video frame of the 3D signal comprises a composite image 507 having the 2m×n image resolution in a checkerboard format. In some embodiments, the composite image may be a left-eye and right-eye parallax composite image of the checkerboard format. In some embodiments, the composite image may be a color rendering and DOF composite image of the checkerboard format.

Those skilled in the art will understand that, the embodiments shown in the drawings are merely illustrative. The two images or the composite image comprised in the video frame of the 3D signal may comprise images of other types and may be arranged in other forms, which falls within the scope of the present disclosure.

In some embodiments, the m×n resolution may be resolution of full high definition (FHD) or higher, and comprises but not limited to 1920×1080, 1920×1200, 2048×1280, 2560×1440,3840×2160 and the like.

In some embodiments, after receiving the video frame comprising the two images, the 3D processing apparatus 130 renders at least one subpixel in each composite subpixel based on one of the two images and renders at least another subpixel in each composite subpixel based on the other of the two images. Similarly, in some embodiments, after receiving the video frame comprising the composite image, the 3D processing apparatus renders at least two subpixels in each composite subpixel based on the composite image. For example, at least one subpixel is rendered according to a first image (partial) in the composite image; and at least another subpixel is rendered according to a second image (partial).

In some embodiments, this is, for example, dynamic rendering based on eye positioning data.

As an explanation rather than a limitation, since the 3D processing apparatus 130 in the embodiments of the present disclosure receives the two images comprised in the video frame data through, for example, the signal interface 140 configured as the internal interface, the resolution of each image (or one half of the resolution of the composite image) corresponds to the composite pixels divided according to the viewpoints (comprising composite subpixels divided according to the viewpoints). On the one hand, since the viewpoint information is unrelated to the transmission process, 3D display of small processing computation and zero resolution loss can be realized; and on the other hand, since the composite pixels (composite subpixels) are arranged corresponding to the viewpoints, rendering of the display screen can be realized in a "point-to-point" manner, thereby greatly decreasing the computation. By contrast, images or videos of a conventional 3D display are still transmitted and displayed based on a 2D display panel, so that problems that the resolution is decreased and rendering computation is sharply increased are caused, and problems such as repeated format adjustment and image or video display adaptation may exist.

In some embodiments, the register 122 of the processor 101 may be used for receiving information on display requirements of the multi-viewpoint 3D display device 100, and the information is typically information that is unrelated to the i viewpoints and related to the m×n resolution of the multi-viewpoint 3D display screen 100, so that the processor 101 transmits a video frame, which satisfies the display requirements, of the 3D signal to the multi-viewpoint 3D display screen 100. The information may be, for example, data packets sent for initial establishment of video transmission.

Therefore, when the video frame of the 3D signal is transmitted, the processor 101 does not need to consider information related to the i viewpoints of the multi-viewpoint 3D display screen 100 (i is more than or equal to 3), but the processor 101 can transmit a video frame, which satisfies the requirements, of the 3D signal to the multi-viewpoint 3D display screen 100 by virtue of information, received by the register 122, related to the m×n resolution of the large-size multi-viewpoint 3D display screen 100.

In some embodiments, the 3D display device 1000 may further comprise a coder/decoder, configured to decompress and code/decode a compressed 3D signal and transmit the decompressed 3D signal to the 3D processing apparatus 130 via the signal interface 140.

In some embodiments, the processor 101 of the 3D display device 1000 reads, from the memory, or receives, from for example an external interface beyond the 3D display device 1000, the video frame of the 3D signal, and then transmits the read or received video frame of the 3D signal to the 3D processing apparatus 130 through the signal interface 140.

In some embodiments, the 3D display device 1000 further comprises a format adjuster (not shown) which is, for example, integrated in the processor 101, configured as a coder/decoder or used as one part of GPU, and used for preprocessing the video frame of the 3D signal, so that the two images comprised in the device have the m×n resolution or the composite image comprised in the device has 2m×n or m×2n resolution.

In another solution, a 3D display system is further provided, comprising a processor unit and the above 3D display device, wherein the processor unit is in communication connection with the 3D display device.

In some embodiments, the 3D display system is configured as a smart TV with a processor unit or an intelligent screen of a cinema.

The multi-viewpoint 3D display screen 100 is used for displaying three-dimensional (3D) images or videos. The multi-viewpoint 3D display screen 100 comprises a display panel. The display panel may be a liquid crystal display (LCD), an organic light emitting diode (OLED), an active matrix organic light-emitting diode (AMOLED), a flexible light emitting diode (FLED), a Mini-LED, a Micro-LED, a Micro-OLED and a quantum-dot light emitting diode (QLED).

In some embodiments, the eye positioning device 150 is in communication connection with the 3D processing apparatus 130, so that the 3D processing apparatus 130 may render corresponding subpixels in composite pixels (composite subpixels) based on the eye positioning data. In some embodiments, the eye positioning device 150 may be further connected with the processor, such as a bypass connection processor.

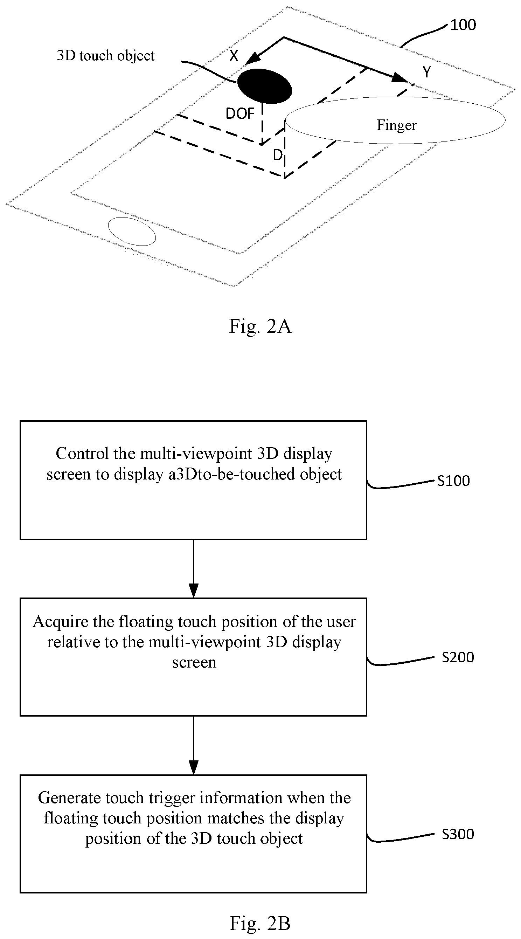

Referring to Fig. 2A, it shows that the multi-viewpoint 3D display screen 100 displays the 3D touch object, and the 3D touch object is, for example, a button of the 3D display effect. When a spatial position of a finger of the user or another touch medium matches the display position of the button of the 3D display effect, touch trigger information is generated, which indicates that the user touches the button of the 3D display effect.

In the present disclosure, a touch trigger signal may be generated without a need of forming a certain distance between the user and the display panel or the touch panel like in 2D touch, but the touch trigger signal may be generated when the spatial position relative to the multi-viewpoint 3D display screen matches the display position of the 3D touch object, thereby realizing floating touch. Operating experience is improved, and sensory uniformity of display and touch is realized.

Referring to Fig. 2B, embodiments of the present disclosure provide a method for realizing floating touch, comprising:
S100, The multi-viewpoint 3D display screen is controlled to display the 3D touch object; the multi-viewpoint 3D display screen comprises a plurality of composite subpixels; each composite subpixel comprises subpixels of corresponding viewpoints; the subpixels in the composite subpixels of the multi-viewpoint 3D display screen are dynamically rendered based on the 3D signal according to a viewpoint where eyes of the user locate; subpixels corresponding to the 3Dtouch object are rendered according to a 3D image signal; and the 3D display effect is shown for the user. In the present disclosure, the multi-viewpoint 3D display screen is used for performing display and touch detection, and can provide the display effect corresponding to the viewpoints for different users and may further provide functions for touch trigger of information for different users, thereby realizing touch operations by multiple users.
S200, A floating touch position of the user relative to the multi-viewpoint 3D display screen is acquired.

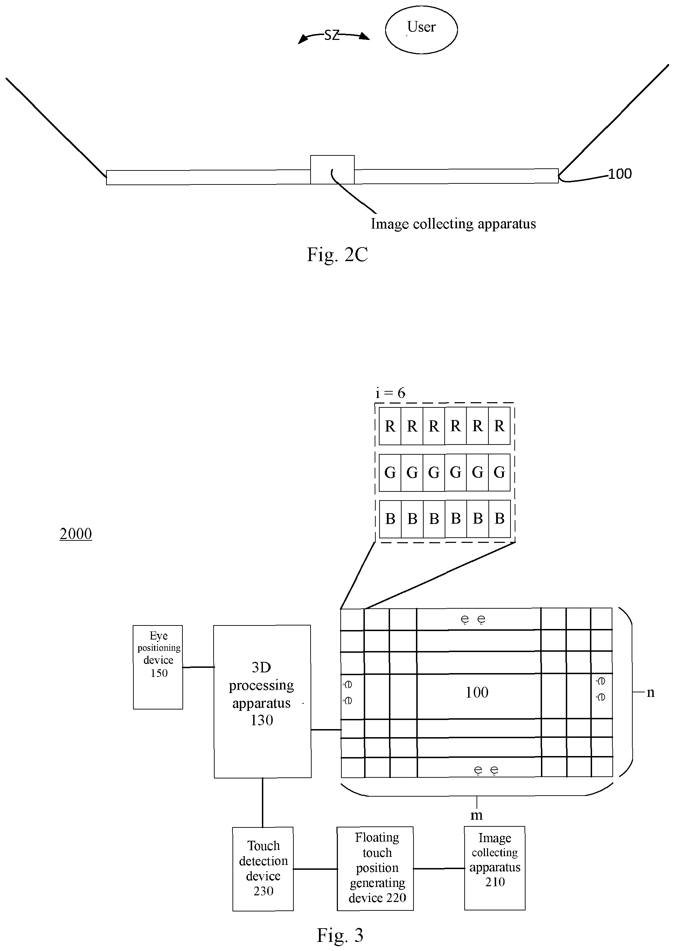

As an explanation rather than a limitation, the floating touch position of the user relative to the multi-viewpoint 3D display screen may be acquired by acquiring a user image. In the present disclosure, the floating touch position is acquired by image detection, and the acquired image is an image in a display direction of the 3D display screen. Generally, in the step S100, eyes of the user will be detected, thereby realizing the 3D display effect, i.e., the user is detectable relative to the 3D display screen. If the eyes of the user can be detected to realize the 3D effect, the user needs to be located in a show zone of the 3D display screen. As shown in Fig. 2C, when the user is located in a show zone SZ, a direction of the multi-viewpoint 3D display screen 100 towards the user is the display direction. At this time, the image in the display direction or in the show is acquired to obtain the user image.

In the present disclosure, during detection of the floating touch position, the floating touch position may be acquired by detecting the spatial position of the user finger. Generally, if the user holds a stylus pen, the floating touch position is acquired by performing spatial position detection on the stylus pen through the image. The user may further hold other articles, such as an object with a specific image, i.e., a baton with round ends or a baton of which the ends are in the shape of a triangular pyramid. In the present disclosure, the position in an image of an object or a body part for touching in the image may be acquired by performing pattern matching on the image, and then the spatial position of the object or the body part for touching is acquired by a binocular vision3D imaging principle. Since a coordinate system of the image collecting apparatus is fixed with a coordinate system of the multi-viewpoint 3D display screen, the spatial position of the floating touch position relative to the multi-viewpoint 3D display screen can be obtained through simple conversion. The above object or body part for touching is the touch medium of the user.

It should be noted that, for the above manner of acquiring the spatial position, in addition to the acquiring manner of the binocular vision 3D imaging principle, the spatial position may further be acquired by a structured light camera. An acquisition direction of the image collecting apparatus is generally consistent with the display direction of the multi-viewpoint 3D display screen 100.

During image detection, full image matching may be performed, and the image may further be detected in a high-probability appearing area of the touch medium. For example, if the display position of the 3D touch object has been foreseen, an area surrounding the display position may be mainly acquired during image acquisition to recognize and acquire the spatial position information of the touch medium.

In the present disclosure, during image acquisition, in addition to recognition of the touch medium to acquire the floating touch position, touch permission control may be performed. An identify label is extracted from the user image, such as the user face, and matches an authorized face. After matching is successful, recognition of the floating touch position is performed, so that an unauthorized user cannot touch the 3D touch object.

S300, Touch trigger information is generated when the floating touch position matches the display position of the 3D touch object. When the floating touch position matches the display position of the 3D touch object, the touch trigger information is generated while meeting preset conditions. The display position comprises displayed plane position information, such as, two-dimensional coordinate information in the display screen 100, and further comprises the DOF. Generally, an origin of the DOF of the 3D touch object is located on a display plane of the multi-viewpoint 3D display screen. In Fig. 2A, the seeing feeling of the user from the DOF is as follows: the 3D touch object (button) is displayed at a location where distances away from the multi-viewpoint 3D display screen 100 and the DOF are the same. Naturally, when the user needs touch, the touch medium will be close to the display position of the 3D touch object. When the distance between the positions is less than a certain threshold, the touch trigger information is generated.

In the present disclosure, an ID number will be set for each 3D touch object in the 3D image displayed by the multi-viewpoint 3D display screen 100. When the touch trigger information is generated, the touch trigger information may carry the above ID number, thereby facilitating subsequent interaction and information input identification.

In the present disclosure, the method may further comprise a pre-calibration step of calibrating a coordinate system of the image collecting apparatus and a display coordinate system of the display screen 100, to determine conversion parameters between the two coordinate systems.

In some embodiments of the present disclosure, the spatial position may be expressed by a rectangular coordinate system. For example, the display position of the 3D touch object comprises the DOF and a plane position (x, y) of the 3D touch object. Certainly, the spatial position may also be expressed in a polar coordinate manner. During position matching, differences of various coordinates are considered; and when certain conditions are met, the touch trigger information is generated.

In some embodiments, in the step S300:
When the floating touch position matches the plane position of the 3D touch object, and a distance of the floating touch position relative to the multi-viewpoint 3D display screen matches the DOF of the 3D touch object, the touch trigger information is generated, wherein the touch trigger information comprises the 3D touch object that matches the floating touch position. Label information of the touched 3D touch object will be added into the touch trigger information, so that which touch object is touched is notified to the external interface, thereby realizing the function of user information input. In the embodiments of the present disclosure, the touch trigger information is generated by matching the DOF and the distance value. Referring to Fig. 2A, in some embodiments of the present disclosure, the floating touch position may be a fingertip position, and when the distance D relative to the multi-viewpoint 3D display screen matches the DOF (i.e., the difference is in a certain range), the touch trigger information is generated. In the embodiments of the present disclosure, the matching process of the plane position may be performed through a distance value of the coordinates, i.e., the matching is successful when the distance value is less than the threshold, otherwise the matching fails when the distance value is more than the threshold. It may be affirmed that the plane position matching is successful when each coordinate difference is less than the threshold. When one coordinate difference is more than the threshold, it is affirmed that the plane position matching fails.

In some embodiments, in the step S300:
Generating the touch trigger information when the distance between the floating touch position and the multi-viewpoint 3D display screen matches the DOF of the 3D touch object comprises: the touch trigger information is generated when the distance between the floating touch position and the multi-viewpoint 3D display screen is less than the DOF of the 3D touch object; and the touch trigger information is generated when the floating touch position crosses the 3D touch object.

In some embodiments, in the step S300:
Generating the touch trigger information when the distance between the floating touch position and the multi-viewpoint 3D display screen matches the DOF of the 3D touch object comprises: the touch trigger information is generated when a difference between the distance, between the floating touch position and the multi-viewpoint 3D display screen, and the DOF of the 3D touch object is in a threshold range.

In some embodiments, in the step S300:
Generating the touch trigger information when the distance between the floating touch position and the multi-viewpoint 3D display screen matches the DOF of the 3D touch object comprises: the touch trigger information is generated when the difference between the distance, between the floating touch position and the multi-viewpoint 3D display screen, and the DOF of the 3D touch object is in the threshold range and when the distance between the floating touch position and the multi-viewpoint 3D display screen is less than the DOF of the 3D touch object.

Generally, if the distance is less than the DOF, after the touch trigger information is generated, a locking state may be formed specified at the touch medium in a certain period of time, so that the touch trigger information will not be generated any more. A relationship between the distance, between the floating touch position and the multi-viewpoint 3D display screen, and the DOF of the 3D touch object may also be detected in real time. Once the touch trigger information is generated, if the distance is always less than the DOF or the difference between the distance and the DOF is always in the threshold range, the touch trigger information is not generated any more. If the distance is more than the DOF or the difference between the distance and the DOF exceeds the threshold range, the locking state is removed, thereby effectively detecting touch trigger.

In some embodiments, in the step S300:
Generating the touch trigger information when the distance between the floating touch position and the multi-viewpoint 3D display screen matches the DOF of the 3D touch object comprises: the touch trigger information is generated when a current distance of the floating touch position relative to the multi-viewpoint 3D display screen is less than the DOF of the 3D touch object and when the distance between the floating touch position and the multi-viewpoint 3D display screen is more than the DOF of the 3D touch object in a previous detection period. In the present disclosure, the spatial position of the floating touch position is periodically acquired. When the floating touch position is judged to jump from the distance more than the DOF to the distance less than the DOF, the touch trigger information is generated, thereby avoiding continuous trigger conditions.

In the embodiments of the present disclosure, the generated touch trigger information will be used for indicating next event occurrence, such as file opening, file closing, order payment and page jumping. Specifically, the events may be set by the user.

In some embodiments, for the same 3D touch object, the brought events may be different. For example, some events may be bound to the user. After identity characteristics of the user are recognized and the touch trigger information of the user is acquired, the events bound to the user are executed. For example, an event occurring corresponding to touch of the 3D button specified at a user A is as follows: the color of the button is adjusted as red; and an event occurring corresponding to touch of the 3D button specified at a user B is as follows: the color of the button is adjusted as green. Since an image of the button is displayed by the multi-viewpoint 3D display screen in the present disclosure, different colors and patterns may be displayed for different viewpoints, so that the user A and the user B can simultaneously perform input and interaction, thereby realizing high efficiency and reliability of information input.

According to the method in the present disclosure, the floating touch position of the user can be acquired at a position that has a distance away from the display screen 100, and when the distance between the floating touch position and the display screen 100 matches the DOF of the 3D touch object, the touch trigger information can be generated, thereby realizing floating touch.

Referring to Fig. 3, in some other embodiments of the present disclosure, a 3D display device 2000 for realizing floating touch is provided, comprising:
the multi-viewpoint 3D display screen 100 in the above embodiments;
the 3D processing apparatus 130 in the above embodiments, configured to control the multi-viewpoint 3D display screen 100 to display a 3D touch object;
an image collecting apparatus 210, configured to acquire a plurality of user images;
a floating touch position generating device 220, configured to acquire a floating touch position of the user relative to the multi-viewpoint 3D display screen 100 according to the user images; and
a touch detection device 230, configured to generate touch trigger information when the floating touch position matches the display position of the 3D touch object.

The floating touch position generating device 220 is configured to acquire a spatial position of a touch medium of the user relative to the multi-viewpoint 3D display screen according to the user images, wherein the touch medium comprises a finger of the user or a stylus pen. Specific position information is acquired by image detection. The detection may be performed by dual cameras or a structured light camera. During detection, matching detection may be performed by overall sub-images or around the display position of the 3D touch object, to improve processing efficiency.

In the present disclosure, the floating touch position generating device 220 and the touch detection device 230 may be integrated together or may be separately arranged.

In the embodiments of the present disclosure, the touch detection device 230 may be integrated into the 3D processing apparatus 130, or the touch detection device 230 and the 3D processing apparatus 130 are integrated together. In this way, a distance of data transmission can be decreased, and timeliness of detection is improved. The 3D processing apparatus 130 transmits the display position of the 3D touch object to the touch detection device 230.

The multi-viewpoint 3D display screen 100 comprises a plurality of composite subpixels, and each of the composite subpixels comprises subpixels of corresponding viewpoints; and the 3D processing apparatus 130 is configured to dynamically render subpixels SP in the composite subpixels CSP of the multi-viewpoint 3D display screen 100 based on a 3D signal according to a viewpoint where eyes of the user locate.

In the embodiments of the present disclosure, the 3D display device 2000 further comprises an eye positioning device 150 configured to acquire the viewpoint where eyes of the user locate. The eye positioning device 150 transmits the viewpoint where eyes of the user locate to the 3D processing apparatus 130, so that the 3D processing apparatus 130 performs 3D display according to the viewpoints of the user.

In some embodiments, the display position of the 3D touch object comprises the DOF and the plane position of the 3D touch object;
the touch detection device 230 is configured to generate the touch trigger information when the floating touch position matches the plane position of the 3D touch object and the distance between the floating touch position and the multi-viewpoint 3D display screen 100 matches the DOF of the 3D touch object, wherein the touch trigger information comprises the 3D touch object that matches the floating touch position.

After the touch detection device 230 determines matching between the floating touch position and the plane position of the 3D touch object, the relationship between the DOF and the distance is determined. In some embodiments, the touch detection device 230 is configured to:
generate the touch trigger information when the distance between the floating touch position and the multi-viewpoint 3D display screen 100 is less than the DOF of the 3D touch object.

In some embodiments, the touch detection device 230 is configured to:
generate the touch trigger information when the current distance between the floating touch position and the multi-viewpoint 3D display screen is less than the DOF of the 3D touch object and when the distance between the floating touch position and the multi-viewpoint 3D display screen is more than the DOF of the 3D touch object in a previous detection period.

In some embodiments, the touch detection device 230 is configured to:
generate the touch trigger information when a difference between the distance, between the floating touch position and the multi-viewpoint 3D display screen, and the DOF of the 3D touch object is in a threshold range.

In some embodiments, the touch detection device 230 is configured to:
generate the touch trigger information when the difference between the distance, between the floating touch position and the multi-viewpoint 3D display screen, and the DOF of the 3D touch object is in the threshold range and when the distance between the floating touch position and the multi-viewpoint 3D display screen is less than the DOF of the 3D touch object.

In the present disclosure, the multi-viewpoint 3D display device 2000 for realizing floating touch can acquire a spatial position of the touch medium relative to the display device in a certain distance away from the display device by shooting an image of the touch medium of the user, the spatial position matches the display position of the 3D touch object, and touch trigger information with the touched 3D touch object is generated after matching is successful.

The display device in the present disclosure can realize multi-viewpoint 3D display, enable different users to see the 3D touch object and realize floating touch for the users. Further, different event generation is realized for different users under the same 3D touch object, thereby realizing synchronous information input and information interaction for different users. In some embodiments, the 3D display device 2000 in the present disclosure can further perform identity recognition for facial images of the users, and then touch detection is performed after authentication.

Embodiments of the present disclosure provide a 3D terminal for realizing floating touch. The structure of the 3D terminal is shown as Fig. 7, and comprises:
a processor 700 and a memory 701, and may further comprise a communication interface 702 and a bus 703, wherein the processor 700, the communication interface 702 and the memory 701 may complete mutual communication through the bus 703. The communication interface 702 may be used for information transmission. The processor 700 may call a logic instruction in the memory 701, to execute the method for realizing floating touch in the above embodiments.

In addition, the logic instruction in the memory 701 may be realized in the form of a software function unit and may be stored in a computer readable storage medium while serving as an independent product for sales or use.

The memory 701 as a computer readable storage medium may be used for storing software programs and computer executable programs, such as program instructions/modules corresponding to the method in the embodiments of the present disclosure. The processor 700 executes function application and data processing by running the program instructions/modules stored in the memory 701, thereby realizing the method for realizing floating touch in the above method embodiments.

The memory 701 may comprise a program storage area and a data storage area, wherein the program storage area may store an operating system and an application program needed by at least one function. The data storage area may store data created according to use of a terminal device. In addition, the memory 701 may comprise a high speed random access memory, and may further comprise a nonvolatile memory.

Embodiments of the present disclosure provide a product, such as a computer and a mobile phone, comprising the above 3D terminal for realizing floating touch.

Embodiments of the present disclosure provide a computer readable storage medium that stores computer executable instructions. The computer executable instructions are set for executing the above method for realizing floating touch.

Embodiments of the present disclosure provide a computer program product, comprising computer programs stored in the computer readable storage medium. The computer programs comprise program instructions. When the program instructions are executed by the computer, the computer executes the above method for realizing floating touch.

Technical solutions of embodiments of the present disclosure may be reflected in the form of a software product, which is stored in a storage medium and comprises one or more instructions for enabling computer equipment (which may be a personal computer, a server, network equipment or the like) to perform all or some steps of the method in embodiments of the present disclosure. The storage medium may be a non-transient storage medium, comprising: a plurality of media capable of storing program codes, such as a U disk, a mobile hard disk, a read-only memory (ROM), a random access memory (RAM), a diskette or an optical disk. The above computer readable storage medium may be a transient computer readable storage medium, and may also be a non-transient computer readable storage medium.

The above description and drawings sufficiently illustrate the embodiments of the present disclosure to enable those skilled in the art to practice them. Other embodiments may comprise structural, logical, electrical, process, and other changes. The embodiments represent only possible changes. Unless expressly required, individual components and functions are optional and the order of operations may be changed. Parts and features of some embodiments may be included in or substituted for parts and features of other embodiments. The scope of the embodiments of the present disclosure includes the full scope of the claims, and all available equivalents of the claims. When used in the present application, although the terms of "first", "second", etc. may be possibly used in the present application to describe various elements, these elements should not be limited by these terms. These terms are only used to distinguish one element from another. For example, without changing the meaning of the description, a first element may be called as a second element, and similarly, the second element may be called as the first element, as long as all of "the first elements" that appear are consistently renamed and all of "the second elements" that appear are consistently renamed. The first element and the second element are both elements, but may not be the same element. Moreover, the terms used in the present application are used to describe the embodiments only and not to limit the claims.

Herein, the difference of each embodiment from each other may be the focus of explanation. The same and similar parts among all of the embodiments may be referred to each other. For the method and product disclosed by the embodiments, if the method and product correspond to a method part disclosed by the embodiments, the description of the method part can be referred to for the related part.

Those skilled in the art may recognize that the units and algorithm steps of each example described in conjunction with the embodiments disclosed herein can be implemented in electronic hardware, or a combination of computer software and electronic hardware. Whether these functions are performed in hardware or software may depend on the specific application and design constraints of the technical solution. Those skilled in the art may use different methods for implementing the described functions for each particular application, but such implementations should not be considered beyond the scope of the embodiments of the present disclosure. Those skilled in the art may clearly understand that, for the convenience and brevity of description, the corresponding processes in the above method embodiments may be referred to for the specific working processes of the above systems, devices and units, which will not be repeated here.

In the embodiments disclosed herein, the disclosed method and product (including, but not limited to the apparatus and the device) may be realized in other ways. For example, the device embodiments described above are merely schematic. For example, the division of the units may be only a logical functional division, and may be an additional division manner in actual realization. For example, multiple units or components may be combined or integrated into another system, or some features may be ignored or not executed. In addition, the displayed or discussed mutual coupling or direct coupling or communication connection may be indirect coupling or communication connection through some interfaces, devices or units, and may be electrical, mechanical or other forms. The units described as separate components may or may not be physically separated, and the components shown as the units may or may not be physical units, that is, may be located in one place, or may be distributed on multiple network units. The present embodiments may be implemented by selecting some or all of the units according to actual needs. In addition, each functional unit in the embodiments of the present disclosure may be integrated into one processing unit, or each unit may exist physically alone, or two or more units may be integrated into one unit.

The flowcharts and block diagrams in the drawings show architectures, functions and operations possibly implemented by systems, methods and computer program products according to the embodiments of the present disclosure. In this regard, each block in the flowcharts or block diagrams may represent a part of a module, program segment or code, and part of the module, program segment or code contains one or more executable instructions for implementing specified logical functions. In some alternative implementations, the functions marked in the blocks may also occur in an order different from the order marked in the drawings. For example, two continuous blocks may actually be executed substantially concurrently, or sometimes may be executed in a reverse order, depending on the functions involved. In the descriptions corresponding to the flowcharts and the block diagrams in the drawings, operations or steps corresponding to different blocks may also occur in different orders than those disclosed, and sometimes there is no specific order between different operations or steps. For example, two continuous operations or steps maybe actually performed substantially concurrently, or sometimes may be performed in the reverse order, depending on the functions involved. Each block in the block diagrams and/or flowcharts, and combinations of the blocks in the block diagrams and/or flowcharts, can be implemented by special hardware-based systems that perform specified functions or actions, or implemented by combinations of special hardware and computer instructions.

## Claims

1. A method for realizing floating touch, comprising:
controlling a multi-viewpoint 3D display screen to display a 3D touch object, and acquiring a floating touch position of a user relative to the multi-viewpoint 3D display screen; and
generating touch trigger information when the floating touch position matches a display position of the 3D touch object.

2. The method according to claim 1, wherein the multi-viewpoint 3D display screen comprises a plurality of composite subpixels, and each composite subpixel in the plurality of composite subpixels comprises a plurality of subpixels corresponding to a plurality of viewpoints;
controlling the multi-viewpoint 3D display screen to display the 3D touch object comprises:
dynamically rendering subpixels in composite subpixels of the multi-viewpoint 3D display screen based on 3D signals according to a viewpoint where eyes of the user locate, to display the 3D touch object for the user in a 3D effect.

3. The method according to claim 1, wherein acquiring the floating touch position of the user relative to the multi-viewpoint 3D display screen comprises:
collecting a user image of the user;
acquiring a spatial position of a touch medium of the user relative to the multi-viewpoint 3D display screen according to the user image;
wherein the touch medium comprises a finger of the user or a stylus pen.

4. The method according to claim 1, wherein the display position of the 3D touch object comprises a depth of field (DOF) and a plane position of the 3D touch object.

5. The method according to claim 4, wherein generating the touch trigger information when the floating touch position matches the display position of the 3D touch object comprises:
generating the touch trigger information when the floating touch position matches the plane position of the 3D touch object and a distance between the floating touch position and the multi-viewpoint 3D display screen matches the DOF of the 3D touch object,
wherein the touch trigger information comprises the 3D touch object that matches the floating touch position.

6. The method according to claim 5, wherein generating the touch trigger information when the distance between the floating touch position and the multi-viewpoint 3D display screen matches the DOF of the 3D touch object comprises:
generating the touch trigger information when the distance between the floating touch position and the multi-viewpoint 3D display screen is less than the DOF of the 3D touch object;
or,
generating the touch trigger information when a difference between the distance, between the floating touch position and the multi-viewpoint 3D display screen, and the DOF of the 3D touch object is in a threshold range;
or,
generating the touch trigger information when a difference between the distance, between the floating touch position and the multi-viewpoint 3D display screen, and the DOF of the 3D touch object is in a threshold range, and when the distance, between the floating touch position and the multi-viewpoint 3D display screen, is less than the DOF of the 3D touch object.

7. A 3D display device for realizing floating touch, comprising:
a multi-viewpoint 3D display screen;
a 3D processing apparatus, configured to control the multi-viewpoint 3D display screen to display a 3D touch object;
an image collecting apparatus, configured to collect a user image;
a floating touch position generating device, configured to acquire a floating touch position of a user relative to the multi-viewpoint 3D display screen according to the user image; and
a touch detection device, configured to generate touch trigger information when the floating touch position matches the display position of the 3D touch object.

8. The 3D display device according to claim 7, wherein the floating touch position generating device is configured to acquire a spatial position of a touch medium of the user relative to the multi-viewpoint 3D display screen according to the user image,
wherein the touch medium comprises a finger of the user or a stylus pen.

9. The 3D display device according to claim 7, wherein the multi-viewpoint 3D display screen comprises a plurality of composite subpixels, and each composite subpixel in the plurality of composite subpixels comprises a plurality of subpixels corresponding to a plurality of viewpoints;
the 3D processing apparatus is configured to dynamically render subpixels in composite subpixels of the multi-viewpoint 3D display screen based on 3D signals according to a viewpoint where eyes of the user locate.

10. The 3D display device according to claim 9, further comprising an eye positioning device, configured to acquire the viewpoint where eyes of the user locate.

11. The 3D display device according to claim 7, wherein the display position of the 3D touch object comprises a DOF and a plane position of the 3D touch object;
the touch detection device is configured to generate touch trigger information when the floating touch position matches the plane position of the 3D touch object and when a distance between the floating touch position and the multi-viewpoint 3D display screen matches the DOF of the 3D touch object;
wherein the touch trigger information comprises the 3D touch object that matches the floating touch position.

12. The 3D display device according to claim 11, wherein the touch detection device is configured to:
generate the touch trigger information when the distance between the floating touch position and the multi-viewpoint 3D display screen is less than the DOF of the 3D touch object;
or,
generate the touch trigger information when a difference between the distance, between the floating touch position and the multi-viewpoint 3D display screen, and the DOF of the 3D touch object is in a threshold range;
or,
generate the touch trigger information when a difference between the distance, between the floating touch position and the multi-viewpoint 3D display screen, and the DOF of the 3D touch object is in a threshold range, and when the distance, between the floating touch position and the multi-viewpoint 3D display screen, is less than the DOF of the 3D touch object.

13. A 3D terminal for realizing floating touch, comprising:
a processor; and
a memory storing program instructions;
wherein the processor is configured to execute the method of any one of claims 1-6 when the program instructions are executed.

14. A computer readable storage medium, storing computer executable instructions, wherein the computer executable instructions are configured to execute the method of any one of claims 1-6.

15. A computer program product, comprising computer programs stored on a computer readable storage medium, wherein the computer programs comprise program instructions, and make a computer execute the method of any one of claims 1-6 when the program instructions are executed by the computer.
